# EUROPÄISCHE PATENTSCHRIFT

(11) **EP 1 355 079 B1**
(45) Veröffentlichungstag und Bekanntmachung des Hinweises auf die Patenterteilung: **14.09.2005**
(21) Anmeldenummer: 03002426.9
(22) Anmeldetag: 05.02.2003
(51) Int. Cl.: F16F 9/04

(54) **Schauchrollbalg-Luftfeder**
Rolling lobe air spring
Ressort pneumatique à soufflet roulant

(30) Priorität: 16.04.2002 DE 10216750
(43) Veröffentlichungstag der Anmeldung: 22.10.2003
(73) Patentinhaber: ContiTech Luftfedersysteme GmbH, 30165 Hannover (DE)
(72) Erfinder: Stöter, Bernd, 30880 Laatzen (DE); Klement, Sven, 30161 Hannover (DE)
(74) Vertreter: Finger, Karsten

(56) Entgegenhaltungen:
- EP-A- 0 548 581
- EP-A- 1 031 756
- WO-A-00/43692
- DE-A- 2 050 613

## Beschreibung

### Anwendungsgebiet

Die Erfindung geht aus von einer Schlauchrollbalg-Luftfeder nach der Gattung des Hauptanspruchs.

### Stand der Technik

Ein üblicher Schlauchrollbalg weist eine zylindrische Wandung auf, die axial an einem Abrollkolben befestigt ist. Die meisten Schlauchrollbalg-Luftfeder-Typen funktionieren ausschließlich im druckbeaufschlagten Zustand. Im drucklosen Zustand ist ein Abrollen des Schlauchrollbalgs auf dem Abrollkolben nicht ohne weiteres möglich.
Ein druckloser Zustand kann z. B. bei Wartungsarbeiten auftreten. Wird ein Fahrzeug auf einer Hebebühne angehoben, werden die Luftfedern auseinandergezogen (vom Fahrzeuggewicht entlastet und durch das Achsgewicht gezogen). Wird das Fahrzeug dann mit drucklosen Luftfedern wieder abgesetzt, ergeben sich bei herkömmlichen Schlauchrollbälgen unkontrollierbare Stauchungen, die von der Beschädigung bis hin zur Zerstörung der Luftfeder führen.

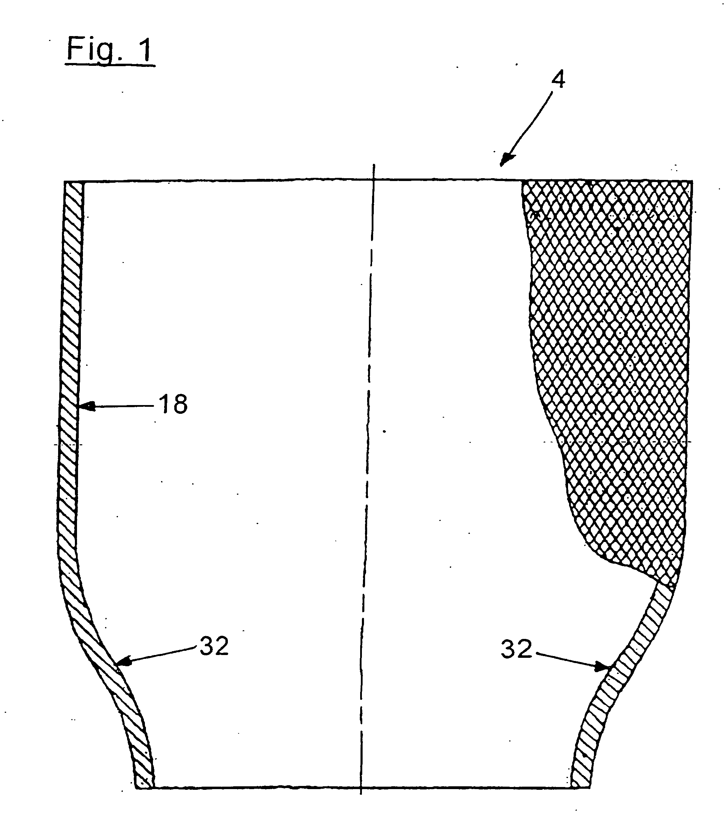

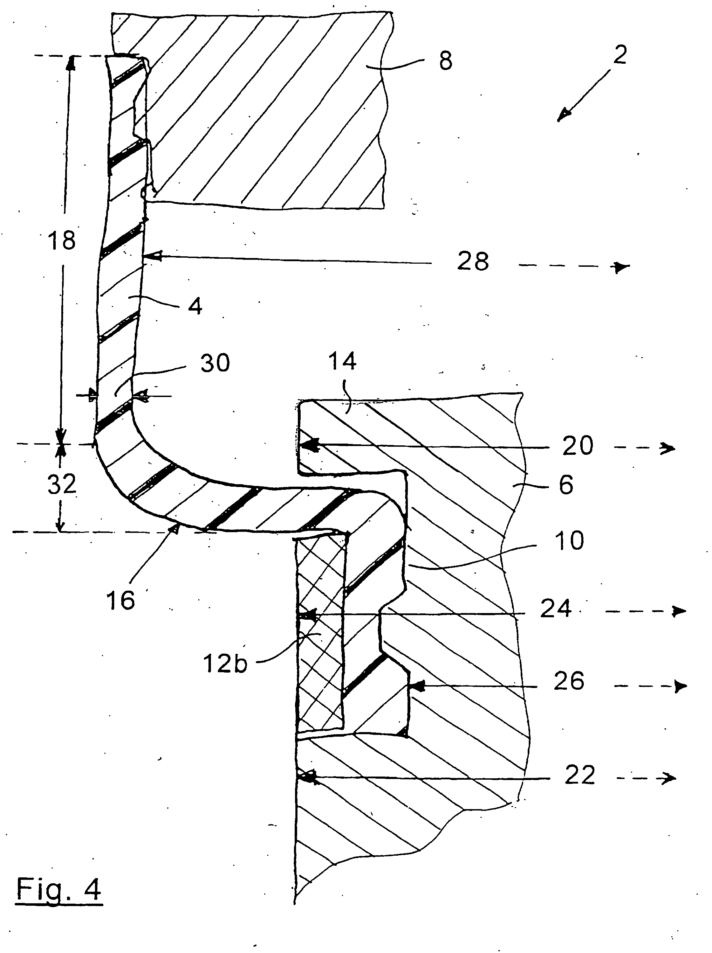

In der EP 0 548 581 B1 wird ein einen Schlauchrollbalg, einen Luftfederdeckel und einen Luftfederkolben aufweisendes Luftfedersystem beschrieben, bei der die Rollbalg-Einspannung nicht - wie üblich - axial sondern radial ausgerichtet ist (siehe dort z. B. Fig. 1 und Fig. 4). Die radiale Ausrichtung der Rollbalg-Befestigung hat den Vorteil, dass für den Abrollvorgang lediglich nur eine 90°-Umlenkung erforderlich wird. Der quer zur

Achse orientierte Austritt aus der Einspannung bedingt - allein betrachtet - noch keine Voraussetzung für ein druckloses Abrollen. Des weiteren betrachtet, stellt die EP 0 548 581 B1, Fig. 1, sehr treffend den Sachverhalt dar (drucklos: ausgezogene Linien; druckbeaufschlagt: gestrichelte Linien). Im drucklosen Zustand (ausgezogene Linien) ergibt sich ein scharfes Abknicken des radial aus der Befestigung austretenden Rollbalgs. Bei drucklosem Stauchen der Luftfeder ist ein einwandfreies Abrollen des Balgs auf der Kolbenwand nicht gewährleistet. Es gibt keinerlei konstruktiven Beitrag zum Problem "druckloses Abrollen". Insbesondere wird das konstruktiv wesentliche Detail der Rollbalg-Einspannung in keinen Zusammenhang mit radialem Austreten im drucklosen Zustand gebracht. Es wird nichts darüber ausgesagt, wie der Schlauchrollbalg im nichteingebauten Zustand aussehen soll.

Das in der WO 00/43692 beschriebene, gattungsgemäße Luftfedersystem weist ebenfalls einen Luftfederbalg, einen Luftfederdeckel, einen Luftfederkolben und zudem eine Außenführung auf.
Um bei derartigen, mit Außenführung versehenen Luftfedersystemen die im drucklosen Betrieb unter Umständen auftretende Falten- und Knick-Bildung zu vermeiden, weist der Luftfederbalg einen "dynamischen" Bereich auf, wobei die Rollfalte während des Ein- und Ausfederungsvorganges eine Änderung ihres Durchmessers erfährt. Zu diesem Zweck ist der Luftfederbalg in seinem dynamischen Bereich im Wesentlichen konisch ausgebildet. Eine derartige Änderung des Rollfaltendurchmessers im Bereich des Ein/Ausfederungshubs bewirkt eine Progression der Federwirkung. D. h.: Die Vermeidung der im drucklosen Betrieb befürchteten Falten- und Knick-Bildung ist zwangsweise an eine progressive Federcharakteristik gekoppelt. Eine progressive Federcharakteristik ist aber nicht immer wünschenswert, denn die Härte einer progressiven Feder variiert je nach Nulllage. Zudem ist eine optimale Dämpferabstimmung nur auf eine einzige Federhärte möglich, so dass auch aus Gründen der Dämpferabstimmung eine progressive Federcharakteristik nicht sonderlich erstrebenswert erscheint.

### Aufgabe, Lösung und Vorteile der Erfindung

Die Aufgabe der Erfindung besteht darin, auch bei einer Schlauchrollbalg-Luftfeder mit nicht-progressiver Kennlinie ein einwandfreies Abrollen im drucklosen Zustand zu gewährleisten.

Durch die im Anspruch 1 genannten Verknüpfung der Merkmale: "Durchmessersprung des Rollbalgs im Bereich seiner kolbenseitigen Befestigung" und "radialer Austritt des Rollbalgs aus dem Abrollkolben" ist die gewünschte Knicksicherheit im drucklosen Zustand der Luftfeder auch ohne Außenführung zuverlässig gewährleistet.
Durch die erfindungsgemäße Verknüpfung dieser beiden Merkmale wird sichergestellt, dass die radiale Orientierung an der Befestigungsstelle auch im drucklosen Zustand gegeben ist, so dass der Balg nach beiden Seiten problemlos umgelenkt werden kann.

Der Schlauchrollbalg weist zumindest an seinem Befestigungs-Ende eine - vorzugsweise konvex gebogene - Verjüngung auf, wobei der Einspannbereich mit einem kleineren Durchmesser versehen ist, während der übrige Balgkörper einen größeren Durchmesser mit zylindrischer Gestalt aufweist. Aufgrund der besonderen Art der Einspannung am Abrollkolben-Ende beträgt die Umlenkung des Rollbalgs nur ca. 90°. Dabei entspricht der Außendurchmesser des am Kolben-Ende befindlichen Wulstes annähernd dem Abrolldurchmesser des Kolbens. Außerdem entspricht der Außendurchmesser des Wulstes annähernd dem Außendurchmesser des geklemmten Klemmringes. Die umlaufende Vertiefung (=Einspannbereich) und der Wulst sind so ausgebildet, dass bereits im drucklosen Zustand ein eindeutiger Durchmessersprung zwischen Einspanndurchmesser und übrigem Balgdurchmesser vorliegt.

Bei der praktischen Umsetzung der Erfindung haben sich die in den Unteransprüchen angegebenen Dimensionierungen als besonders vorteilhaft erwiesen:

Die Durchmesser-Differenz von Rollbalg und Abrollkolben ist ungefähr gleich dem Achtfachen der Wandstärke des Rollbalgs, wobei die Wandstärke des Rollbalgs ca 1,5 bis 6 mm beträgt, d. h.: D_{D}- DK ≃ 12 bis 48 mm.

Der konische Bereich des Rollbalgs ist kleiner als die doppelte Durchmesser-Differenz von Rollbalg und Abrollkolben, d. h.: Lü < 24 bis 96 mm.
Das Produkt aus Rollbalgdurchmesser und Rollbalg-Wandstärke ist größer als die zylindrische Rollbalg-Länge, d. h.: L_{Zyl} < 1,5 D_{D} bis 6 D_{D} [mm].

Verglichen mit dem genannten Stand der Technik wird mit der erfindungsgemäßen Luftfeder ein günstigeres Abrollverhalten insbesondere bei druckloser Luftfeder erzielt. Bei Kraftausübung auf den Abrollkolben ist ein druckloses Einfalten unter Beibehaltung eines kleinen Abrollradius möglich. Beim drucklosen Einrollen wird ein Einknicken des Balges vermieden.

### Zeichnungen

Ein Ausführungsbeispiel der Erfindung ist in den Zeichnungen dargestellt und in der nachfolgenden Beschreibung näher erläutert. Es zeigt:
Fig. 1 einen Schlauchrollbalg, (teilweise) im Längsschnitt;
Fig. 2 den Längsschnitt durch eine Luftfeder, drucklos;
Fig. 3 den Längsschnitt durch eine Luftfeder unter Betriebsdruck, links in Ruheposition, rechts im eingefederten Zustand; und
Fig. 4 einen Ausschnitt des in Fig. 2 dargestellten Längsschnitts durch die Luftfeder.

### Beschreibung der Erfindung

Der in Fig. 1 dargestellte, erfindungsgemäße Schlauchrollbalg 4 weist - wie bei Schlauchrollbälgen üblich - keine endseitigen Wülste auf. Dadurch ist es möglich, Schlauchrollbälge als Abschnitte eines endlosen Schlauches herzustellen. Während herkömmliche Schlauchrollbälge rein zylindrisch ausgebildet sind, weist der erfindungsgemäße Schlauchrollbalg 4 an seinem "unteren", dem Abrollkolben zugewandten Ende eine in etwa konische Verjüngung (konischer Bereich, 32) auf. Die Verjüngung ist bereits im unverspannten, drucklosen Zustand gegeben. Der "obere" Bereich 18 des Schlauchrollbalgs 4 ist - wie bei herkömmlichen Schlauchrollbälgen - zylindrisch.

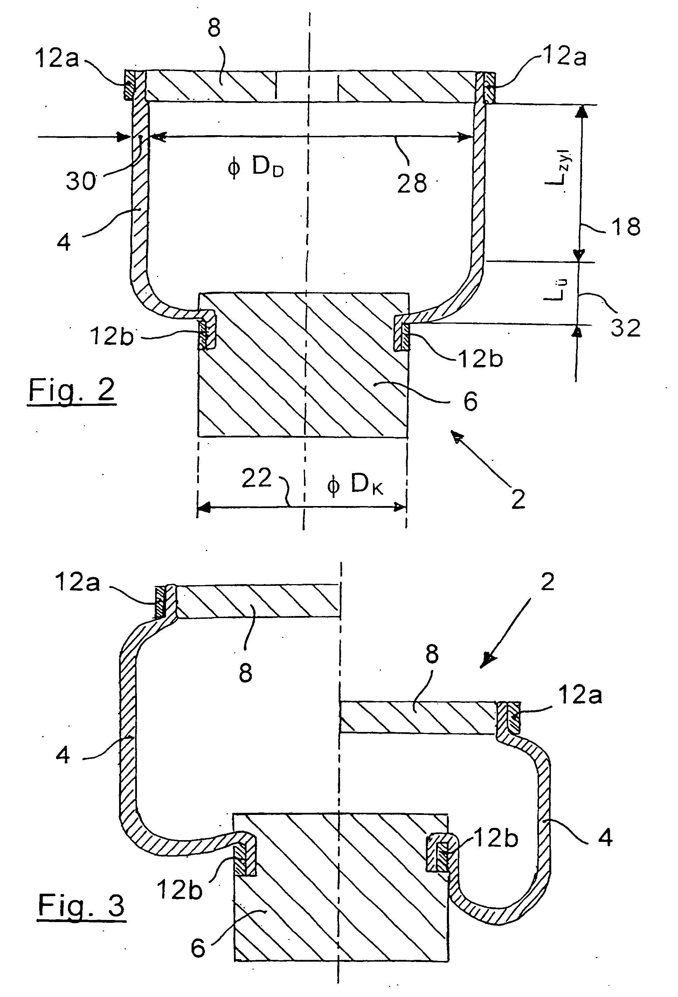

Die Fig. 2 zeigt denselben Schlauchrollbalg 4, aber im eingebauten Zustand, d. h. als Teil einer Luftfeder 2. An seinem "oberen" Ende ist der Balg 4 an einem Deckel (Abdeckplatte) 8 und an seinem "unteren" Ende an einem Abrollkolben 6 jeweils mit einem Klemmring 12a, 12b druckdicht befestigt. Die sich verjüngende Gestalt und die Art der Einspannung am Abrollkolben 6 haben zur Folge, dass der Schlauchrollbalg 4 bereits im drucklosen Zustand die Einspannstelle am Abrollkolben 6 quasi rechtwinklig verlässt.
"L_{zyl}" gibt den zylindrischen Bereich 18 des Schlauchrollbalges 4 an, während "L_{ü}" die axiale Länge des in etwa konischen Bereichs 32 bedeutet. Mit "D_{D}" ist der Durchmesser des zylindrischen Bereichs 18 bezeichnet; "D_{K}" ist der Durchmesser des Abrollkolbens 6. "30" bezeichnet die Wandstärke des Schlauchrollbalgs 4.

Die Fig. 3 zeigt denselben Grundaufbau einer Luftfeder 2, bestehend aus Abdeckplatte 8, Rollbalg 4 und Abrollkolben 6. Durch eine Beaufschlagung der Luftfeder 2 mit Druckluft ist der Rollbalg 4 entsprechend nach außen gebläht (linke Seite). Die rechte Seite der Fig. 3 stellt den eingefederten Zustand der druckbeaufschlagten Luftfeder 2 dar.

Aus der Fig. 4 gehen die beiden wesentlichen Details der Erfindung hervor, nämlich die Verjüngung des "unteren" Rollbalgbereichs 32 und die Art der Einspannung des Rollbalgs 4 am Abrollkolben 6.

Wie bereits an der Fig. 1 erläutert, ist der "obere" Bereich 18 des Schlauchrollbalgs 4 zylindrisch ausgebildet (L_{zyl}). An den zylindrischen Bereich 18 schließt sich nach unten der in etwa konische (Übergangs-) Bereich (L_{ü}) 32 an. An seinem oberen Ende ist der Rollbalg 4 mittels eines Klemmringes an der (oben befindlichen) Abdeckplatte (Deckel) 8 druckdicht eingespannt.
Das unter Ende des Schlauchrollbalgs 4 ist mittels eines Klemmringes 12b am Abrollkolben 6 ebenfalls druckdicht und zugfest angebracht. Zwecks Befestigung des Schlauchrollbalgs 4 weist der Abrollkolben 6 an seinem oberen Ende eine umlaufende Vertiefung (Nut) 10 auf.
Diese Vertiefung 10 dient zur Aufnahme des unteren Endes des Schlauchrollbalgs 4, auf den der Klemmring 12b aufgesetzt und allseits zusammengedrückt wird.
Die umlaufende Vertiefung (Nut) 10 wird von einem Wulst 14 begrenzt, der den oberen Rand des Abrollkolbens 6 bildet. Der Außendurchmesser 20 des Wulstes 14 entspricht annähernd dem Außendurchmesser 24 des Klemmringes 12b und außerdem dem Abrolldurchmesser (D_{K}) 22 des Kolbens 6. Die umlaufende Vertiefung (=Einspannbereich) 10 und der Wulst 14 sind so ausgebildet, dass (bereits) im drucklosen Zustand ein eindeutiger Durchmessersprung zwischen dem zylindrischen Durchmesser (D_{K}) 28 des zylindrischen Balgbereichs 18 und dem Durchmesser 26 im Spannbereich des Balges 4 am Kolben 6 vorliegt, wodurch das mittels Klemmring 12b eingespannte Rollbalg-Ende um 90° abgelenkt wird und senkrecht (radial) nach außen gerichtet ist.

### Bezugszeichenliste

- 2: Luftfeder
- 4: Schlauchrollbalg, Rollbalg
- 6: Abrollkolben
- 8: Abdeckplatte
- 10: Vertiefung, Nut, Einspannbereich
- 12a, 12b: Klemmring
- 14: Wulst
- 16: (konische) Verjüngung des Rollbalgs
- 18: zylindrischer Bereich des Rollbalgs (L_{Zyl})
- 20: Außendurchmesser des Wulstes
- 22: Abrolldurchmesser des Kolbens (D_{K})
- 24: Außendurchmesser des Klemmringes
- 26: Einspanndurchmesser des Balgs
- 28: Balgdurchmesser im zylindrischen Bereich, übriger Balgdurchmesser (D_{D})
- 30: Wandstärke des Rollbalgs
- 32: konische Länge (konischer Bereich) des Rollbalgs (L_{Ü})

## Patentansprüche

1. Schlauchrollbalg-Luftfeder (2),
dessen Schlauchrollbalg (4) an dessen einem Ende an einer Abdeckplatte (8) und an dessen anderem Ende an einem Abrollkolben (6) druckdicht und zugfest angebracht ist,
wobei der Durchmesser des Schlauchrollbalgs (4) an seinem, dem Abrollkolben (6) zugewandten Ende geringer ist als an seinem, der Abdeckplatte (6) zugewandten Ende,
wobei
der Schlauchrollbalg (4) - im drucklosen Zustand - in seinem, dem Abrollkolben (6) zugewandten Bereich (32) einen eindeutigen Durchmessersprung aufweist, und
der Abrollkolben (6) an seinem oberen Ende eine umlaufende Vertiefung (10) zur Aufnahme des mittels eines außen aufgesetzten Klemmringes (12b) druckdicht und zugfest aufzubringenden Rollbalg-Endes **dadurch gekennzeichnet, dass** der Abrollkolben einen Wulst (14) zur Umlenkung des Rollbalgs (4) aufweist,
wobei der Außendurchmesser (20) des Wulstes (14) annähernd dem Außendurchmesser (24) des geklemmten Klemmringes (12b) und dem Abrolldurchmesser (D_{K}, 20) des Kolbens (6) entspricht, und
der Schlauchrollbalg (4) dass bereits im drucklosen Zustand aus seiner Befestigung am Abrollkolben (6) unter einem Winkel von ca. 90° - bezogen auf die Luftfederlängsachse - radial austritt.

2. Schlauchrollbalg-Luftfeder nach Anspruch 1,
**dadurch gekennzeichnet,**
- **dass** der Schlauchrollbalg (4) im Hubbereich (18) der Abrollfalte zylindrisch ausgebildet ist, und
- **dass** sich im Übergangsbereich (32) von dem der Abdeckplatte (8) zugewandten Bereich (18) des Schlauchrollbalgs (4) zum Austrittspunkt des Rollbalgs (4) aus dem Abrollkolben (6) - im Luftfederlängsschnitt betrachtet - ein konvexer Radius ergibt.

3. Schlauchrollbalg-Luftfeder nach Anspruch 1 oder 2,
**dadurch gekennzeichnet, dass** die Durchmesser-Differenz von Rollbalg (4) und Abrollkolben (6) ungefähr gleich dem Achtfachen der Wandstärke (30) des Rollbalgs (4) ist, wobei die Wandstärke (30) des Rollbalgs (4) ca. 1,5 bis 6 mm beträgt, d. h. D_{D}- D_{K} = 12 bis 48 mm.

4. Schlauchrollbalg-Luftfeder nach einem der Ansprüche 1 bis 3,
**dadurch gekennzeichnet,**
**dass** der sich verjüngende Bereich (L_{Ü}, 32) des Rollbalgs (4) kleiner als die doppelte Durchmesser-Differenz von Rollbalg (4) und Abrollkolben (6) ist, d. h.: L_{Ü} < 24 bis 96 mm.

5. Schlauchrollbalg-Luftfeder nach einem der Ansprüche 1 bis 4,
**dadurch gekennzeichnet,**
**dass** das Produkt aus Rollbalg-Durchmesser (D_{D}, 28) und Rollbalgwandstärke (30) pro mm größer ist als die zylindrische Rollbalglänge (L_{Zyl}, 18), d. h.: L_{Zyl} < 1,5 D_{D} bis 6 D_{D} [mm].

## Claims

1. Rolling-bellows-type pneumatic spring (2) whose rolling bellows (4) is attached at one of its ends to a cover plate (8) and at its other end to a rolling piston (6) in a pressure-tight and strain-resistant fashion, wherein the diameter of the rolling bellows (4) is smaller at its end facing the rolling piston (6) than at its end facing the cover plate (6), wherein the rolling bellows (4) has, in the pressureless state, a clear jump in diameter in its region (32) facing the rolling piston (6), and the rolling piston (6) has, at its upper end, a circumferential depression (10) for receiving the end of the rolling bellows which is to be applied in a pressure-tight and strain-resistant fashion by means of a clamping ring (12b) which is fitted on the outside, **characterized in that** the rolling piston has a bead (14) for deflecting the rolling bellows (4), wherein the external diameter (20) of the bead (14) corresponds approximately to the external diameter (24) of the clamped clamping ring (12b) and the rolling diameter (D_{K}, 20) of the piston (6), and **in that** even in the pressureless state the rolling bellows (4) emerges radially from its attachment to the rolling piston (6) at an angle of approximately 90° with respect to the longitudinal axis of the pneumatic spring.

2. Rolling-bellows-type pneumatic spring according to Claim 1, **characterized**
- **in that** the rolling bellows (4) is of cylindrical design in the moving region (18) of the rolling fold, and
- **in that** a convex radius is produced in the transition region (32) from that region (18) of the rolling bellows (4) which faces the cover plate (8) to the point where the rolling bellows (4) emerges from the rolling piston (6), considered as a longitudinal section of the pneumatic spring.

3. Rolling-bellows-type pneumatic spring according to Claim 1 or 2, **characterized in that** the difference in diameters between the rolling bellows (4) and rolling piston (6) is approximately equal to eight times the wall thickness (30) of the rolling bellows (4), with the wall thickness (30) of the rolling bellows (4) being approximately 1.5 to 6 mm, i.e. D_{D} - D_{K} = 12 to 48 mm.

4. Rolling-bellows-type pneumatic spring according to one of Claims 1 to 3, **characterized in that** the tapering region (L_{U}, 32) of the rolling bellows (4) is smaller than twice the difference in diameter between the rolling bellows (4) and a rolling piston (6), i.e.: L_{U} < 24 to 96 mm.

5. Rolling-bellows-type pneumatic spring according to one of Claims 1 to 4, **characterized in that** the product of the rolling bellows diameter (D_{D}, 28) and the wall thickness (30) of the rolling bellows per mm is greater than the cylindrical length (L_{Zyl}, 18) of the rolling bellows, i.e.: L_{Zyl} < 1. 5 D_{D} to D_{D} [mm].

## Revendications

1. Ressort pneumatique (2) à soufflet roulant, une des extrémités du soufflet roulant (4) étant installée de manière étanche à la pression et de manière à résister en traction sur une plaque de recouvrement (8) et son autre extrémité à un piston mobile (6), le diamètre du soufflet roulant (4) étant plus petit à son extrémité tournée vers le piston mobile (6) qu'à son extrémité tournée vers la plaque de recouvrement (6), le soufflet roulant (4) présentant à l'état non comprimé un net saut de diamètre dans sa partie (32) tournée vers le piston mobile (6) et le piston mobile (6) présentant à son extrémité supérieure un creux périphérique (10) de réception de l'extrémité du soufflet roulant qui doit être installé de manière étanche à la pression et de manière à résister en traction au moyen d'une bague de serrage (12b) placée à l'extérieur, **caractérisé en ce que** le piston mobile présente un bourrelet (14) pour dévier le soufflet roulant (4), le diamètre extérieur (20) du bourrelet (14) correspondant approximativement au diamètre extérieur (24) de la bague de serrage (12b) serrée et au diamètre de roulement (D_{K}, 20) du piston (6) et le soufflet roulant (4) sortant radialement, déjà à l'état non comprimé, de sa fixation sur le piston mobile (6) sous un angle d'environ 90° par rapport à l'axe longitudinal du ressort pneumatique.

2. Ressort pneumatique à soufflet roulant selon la revendication 1, **caractérisé**
- **en ce que** le soufflet roulant (4) présente une configuration cylindrique dans la zone (18) de la course de déplacement du pli roulant et
- **en ce que** dans la zone de transition (32) entre la zone (18) du soufflet roulant (4) tournée vers la plaque de recouvrement (8) et le point de sortie du soufflet roulant (4) hors du piston mobile (6) donne un rayon convexe en coupe longitudinale du ressort pneumatique.

3. Ressort pneumatique selon les revendications 1 ou 2, **caractérisé en ce que** la différence de diamètre entre le soufflet roulant (4) et le piston mobile (6) est sensiblement égale à l'épaisseur de la paroi (30) du soufflet roulant (4), l'épaisseur de la paroi (30) du soufflet roulant (4) étant d'environ 1,5 à 6 mm, en d'autres termes, D_{D} - D_{K} = 12 à 48 mm.

4. Ressort pneumatique à soufflet roulant selon l'une des revendications 1 à 3, **caractérisé en ce que** la zone (L_{Ü}, 32) du soufflet roulant (4) qui se rétrécit est plus petite que le double de la différence entre le diamètre du soufflet roulant (4) et celui du piston mobile (6), en d'autres termes, L_{Ü} < 24 à 96 mm.

5. Ressort pneumatique à soufflet roulant selon l'une des revendications 1 à 4, **caractérisé en ce que** le produit du diamètre (D_{D}, 28) du soufflet roulant et de l'épaisseur de la paroi (30) du soufflet roulant par mm est plus grand que la longueur cylindrique du soufflet roulant (L_{Zyl}, 18), en d'autres termes: L_{Zyl} < 1,5 D_{D} à 6 D_{D} [mm].
